# EUROPÄISCHE PATENTSCHRIFT

(11) **EP 1 064 785 B1**
(45) Veröffentlichungstag und Bekanntmachung des Hinweises auf die Patenterteilung: **22.10.2003**
(21) Anmeldenummer: 99916838.8
(22) Anmeldetag: 19.03.1999
(51) Int. Cl.: H04N 5/262, H04N 5/00, H04N 5/44

(54) **SCHNITTSTELLENEINRICHTUNG ZWISCHEN EINEM HALBLEITER-SPEICHERMEDIUM FÜR MULTIMEDIALE INHALTE UND EINEM STANDARD-VIDEOANSCHLUSS**
INTERFACE DEVICE BETWEEN A SEMICONDUCTOR STORAGE MEDIUM FOR MULTIMEDIA AND A STANDARD VIDEO TERMINAL
SYSTEME D'INTERFACE ENTRE UN SUPPORT DE DONNEES A SEMI-CONDUCTEUR POUR CONTENUS MULTIMEDIA ET UNE CONNEXION VIDEO STANDARD

(30) Priorität: 19.03.1998 DE 29805046 U
(43) Veröffentlichungstag der Anmeldung: 03.01.2001
(73) Patentinhaber: SCM Microsystems GmbH, 85279 Pfaffenhofen (DE)
(72) Erfinder: NEIFER, Wolfgang, D-85354 Freising (DE)
(74) Vertreter: Degwert, Hartmut, Dipl.-Phys.
(86) Internationale Anmeldenummer: EP9901851
(87) Internationale Veröffentlichungsnummer: WO99048284

(56) Entgegenhaltungen:
- EP-A- 0 681 397
- EP-A- 0 704 813
- EP-A- 0 726 675
- EP-A- 0 790 733
- DE-U- 9 417 937
- HARTWIG S: "SOFTWAREARCHITEKTUREN FUER INTERAKTIVE DIGITALE DECODER" FERNSEH UND KINOTECHNIK, Bd. 50, Nr. 3, 1. März 1996, Seiten 92-94, 96 - 98,, XP000581418
- ENGELKAMP H: "HARD- UND SOFTWARE DER SET-TOP-BOXEN" RADIO FERNSEHEN ELEKTRONIK, Bd. 45, Nr. 8, 1. August 1996, Seiten 20-23, XP000623888

## Beschreibung

Die Erfindung betrifft eine Schnillstclleneinrichtung zwischen einem Speichermedium für multimediale Inhalte und einem Fernsehstandard-Videoanschluß gemäß dem Oberbegriff des Anspruchs 1.

Aus dem Stand der Technik, wie etwa dem Artikel "Softwarearchitekturen für interaktive digitale Decoder" von S. Hartwig, abgedruckt in "Fernseh- und Kinotechnik" Nr. 3/1996, S. 92 ff., sind sogenannte Set-Top-Boxen mit den Merkmalen der Oberbegriffe der Ansprüche 1 und 8 bekannt, die eine Vielzahl von multimedialen Funktionen in einer Fernsehumgebung ermöglichen. Bei diesen Systemen werden PCMCIA-Kartenleser zur Entschlüsselung von Datenströmen der Pay-TV-Anbieter oder für die Überprüfung der Zugangsberechtigung des Benutzers eingesetzt.

Halbleiter-Speichermedien für multimediale Inhalte, die beispielsweise von solchen PCMCIA-Kartenlesern ausgelesen werden können, finden aber auch in anderen Bereichen zunehmende Verbreitung. Ein Beispiel sind Speicherkarten für digitale Bilddaten, die von digitalen Kameras aufgenommen werden. Die schnellen Fortschritte, die in der Halbleiter-Speichertechnologie erzielt werden, eröffnen die Möglichkeit, auch Vidcoinhalte auf Halbleiter-Speichermodulen unterzubringen. Je nach Verwendungszweck und Hersteller bestehen unterschiedliche Standards für Halbleiter-Speichermodule, die sich sowohl in der äußeren Form als auch im Datenformat und der Kontaktbelegung unterscheiden. Für den Zugang zu den gespeicherten Daten sind daher Adapter erforderlich. Diese Adapter stellen gewöhnlich eine Schnittstelle zu einem Datenverarbeitungsgerät vom PC-Standard dar. Somit sind multimediale Inhalte, die auf Halbleiter-Speichermodulen gespeichert sind, nur in einer PC-Umgebung zugänglich.

Aufgabe der Erfindung ist es, multimediale Inhalte, die auf Halbleiter-Speichermedien gespeichert sind, auch einer üblichen Video-Umgebung zugänglich, zu machen insbesondere einer Fernsehumgebung. Erreicht wird dies durch eine Schnittstelleneinrichtung mit den Merkmalen des Anspruchs 1.

Eine weitverbreitete Video-Schnittstelle ist die vom Typ SCART. Sie findet sich sowohl an Fernsehgeräten als auch an Video-Aufzeichnungs- und Abspielgeräten. Die erfindungsgemäße Schnittstelleneinrichtung erlaubt die unmittelbare Benutzung üblicher Fernseh- und Videogeräte zur Wiedergabe von multimedialen Inhalten, die auf Halbleiter-Speichermedien abgelegt sind. Die Anpassung an die verschiedenen Formfaktoren und Datenformate der gängigen Halbleiter-Speichermedien erfolgt mittels des Kartenlesers, der seinerseits als PCMCIA-Karte ausgeführt ist. Die von dem Kartenleser aufbereiteten und an die Video-Einblend-Schnittstelle abgegebenen Daten haben das von dieser Schnittstelle erwartete Datenformat, unabhängig vom Typ des jeweiligen Halbleiter-Speichermediums. Somit können ohne Veränderung der Schnittstelleneinrichtung Halbleiter-Speichermcdien jeglichen Typs und Formats ausgelesen werden. Auch zukünftige Entwicklungen werden berücksichtigt, da lediglich der Kartenleser den Anforderungen eines neuen Medientyps entsprechen muß.

Ein großer Vorteil eines multimedialen Systems mit der erfindungsgemäßen Schnittstelleneinrichtung ist der inhärente Kopierschutz. Die in dem Halbleiter-Speichermedium abgelegten Daten werden in dem Kartenleser decodiert, insbesondere expandiert, und sind von außen nicht zugänglich. Das am Standard-Videoanschluß verfügbare analoge Videosignal ist für Kopierzwecke nicht brauchbar, da eine Verbreitung nur in den üblichen codierten Dalenformaten sinnvoll ist.

Weitere Vorteile und Merkmale der Erfindung ergeben sich aus den Unteransprüchen und aus der folgenden Beschreibung anhand der beigefügten Zeichnung. In der Zeichnung zeigen:
Figur 1 schematisch ein multimediales System mit einer erfindungsgemäßen Schnittstelleneinrichtung;
Figur 2 ein Blockschaltbild der Schnittstelleneinrichtung; und
Figur 3 ein Blockschaltbild einer erweiterten Ausführungsform.

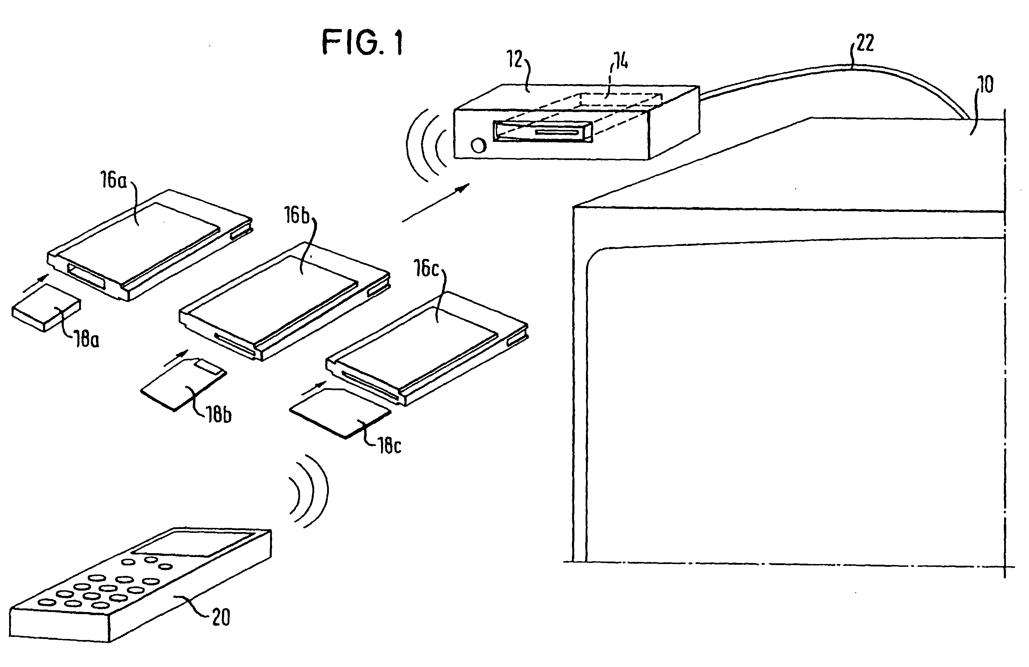

Das in Figur 1 schematisch dargestellte multimediale System enthält ein herkömmliches Fernsehgerät 10 und eine Schnittstelleneinrichtung 12, die bei der gezeigten Ausführungsform ein eigenes Gehäuse aufweist. Die Schnittstelleneinrichtung 12 ist mit einem Steckplatz 14 für einen Kartenleser im Format einer PCMCIA-Karte ausgestattet. In Figur 1 sind drei derartige Kartenleser 16a, 16b, 16c dargestellt. Jeder Kartenleser 16a, 16b und 16c ist für einen bestimmten Typ eines Halbleiter-Speichermediums ausgelegt. In Figur 1 sind drei verschiedene Halbleiter-Speichermodule 18a, 18b und 18c dargestellt. Sie können sich in den Abmessungen, im Datenformat und in der Kontaktbelegung voneinander unterscheiden. Jeder Kartenleser weist einen zu dem zugehörigen Halbleiter-Speichermedium passenden Einsteckschlitz auf. Bestandteil des Systems ist ferner eine Infrarot-Fernbedienung mit einem tragbaren Handgerät 20. Die Schnittstelleneinrichtung 12 ist über ein Kabel 22 mit dem Fernsehgerät 10 verbunden, vorzugsweise mit einem SCART-Anschluß des Fernsehgeräts.

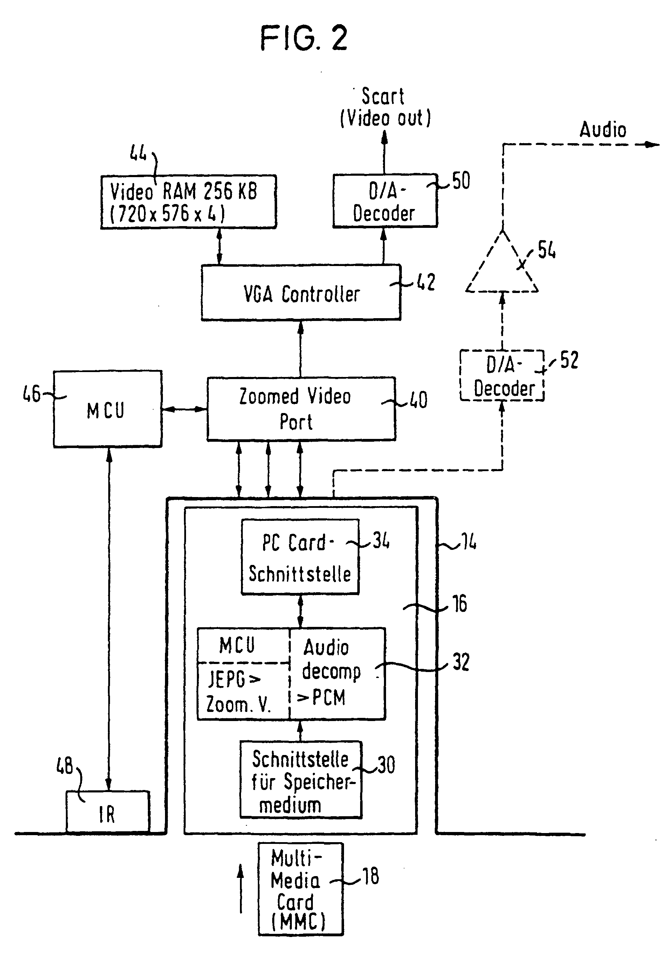

Figur 2 zeigt schematisch die wichtigsten Funktionselemente der Schnittstelleneinrichtung und eines in sie eingesetzten Kartenlesers. In den Steckplatz 14 der Schnittstelleneinrichtung ist ein Kartenleser 16 eingeschoben, der einen Halbleitcr-Speichermodul 18 aufnehmen kann. Bei dem gezeigten Beispiel ist der Speichermodul vom Typ MMC (Multimedia Card). Der Kartenleser 16 ist speziell für die Aufnahme eines solchen Speichermediums und für die Decodierung der darin gespeicherten Daten ausgelegt. Dazu verfügt er über eine Schnittstelle 30, welche die von dem Speichermodul 18 ausgelesenen Daten an eine Steuereinheit 32 weitergibt. Diese · Steuereinheit 32 enthält einen eigenen Mikroprozessor für die Ablaufsteuerung und eine vollständige Decodierelektronik, welche die angelieferten, komprimierten Daten expandiert und in ein Format umsetzt, das zur Weiterverarbeitung in der Schnittstelleneinrichtung geeignet ist. Ferner verfügt der Kartenleser über eine PC-Karten-Schnillstelle 34, die ein einheitliches Anschluß- und Datenformat für die Schnittslelleneinrichtung gewährleistet, unabhängig vom jeweiligen Typ des Speichermediums.

Die Schnittstelleneinrichtung 12 enthält eingangsseitig eine Video-Einblend-Schnittstelle 40, vorzugsweise vom Typ "Zoomed Video Port". Diese Schnittstelle 40 setzt den entgegengenommenen Datenstrom in ein Signal um, das von einer Videographik-Steuereinheit 42 (VGA Controller) nach dem PC-Standard weiterverarbeitet werden kann. Für die Zwischenspeicherung der Videodaten steht in üblicher Weise ein RAM-Speicher 44 zur Verfügung. Die Größe dieses Speichers richtet sich nach der vorgesehenen Auflösung und Farbtiefe. Bei dem in Figur 2 gezeigten Beispiel beträgt die Auflösung 720 x 576 Bildpunkte bei einer Farbtiefe von 4 Bit. Dies sind die minimalen Anforderungen für multimediale Video-Inhalte. Die Schnittstelleneinrichtung enthält ferner eine Mikroprozessor-Steuereinheit 46 für die Ablaufsteuerung und die Bedienung. Die Kommunikation mit dem tragbaren Handgerät 20 erfolgt über eine Infrarot-Schnittstelle 48.

Ausgangsseitig ist die Schnittstelleneinrichtung mit einem Digital/Analog-Decoder 50 versehen, der die von der Graphik-Steuereinheit 42 abgegebenen digitalen Videosignale in ein analoges Ausgangssignal umsetzt und an einen SCART-Anschluß abgibt. Optional ist ein analoger Audio-Ausgang vorhanden, der mittels eines Digital/-Analog-Decoders 52 und eines nachgeschalteten Puffcrverstärkers 54 direkt von den vom Kartenleser 16 gelieferten Daten abgeleitet ist.

Der Kartenleser 16 kann zusätzlich zu der Decodierung bzw. Expansion der aus dem Speichermedium ausgelesenen Daten eine Entschlüsselung vornehmen, wenn die Daten verschlüsselt gespeichert sind. Zusätzlich oder alternativ kann in dem Kartenleser 16 eine Berechtigungsprüfung mittels eines SAM-Moduls oder dergleichen durchgeführt werden. Durch diese Maßnahmen wird die Anfertigung von Raubkopien wirksam verhindert.

Der Steckplatz 14 muß nicht auf ein bestimmtes Datenformat beschränkt sein. Vielmehr ist bei der bevorzugten Ausführungsform vorgesehen, daß dieser Steckplatz die Fähigkeit hat, zwischen verschiedenen Standard-Formaten umgeschaltet zu werden. Dics sind insbesondere die folgenden Standard-Formate:
- Videoport
- Common Interface
- 1394 Interface
- USB.

Die Technik der PCMCIA-Steckplätze macht eine variable Belegung der 68 Kontakte möglich. Zusätzlich besitzt ein PCMCIA-Steckplatz die Fähigkeit, das Format einer eingesteckten PC-Karte zu erkennen und die Kontaktbelegung an das erkannte Datenformat anzupassen.

In Weiterbildung der Erfindung ist vorgesehen, daß der am Steckplatz 14 anschließbare Kartenleser 16 seinerseits eine Schnittstelle zum Anschluß eines externen Datenkanals aufweist. Die Kopplung des Kartenlesers 16 mit dem externen Datenkanal erfolgt beispielsweise drahtlos über eine Funk- oder Infrarotverbindung oder auch über einen an einer Schmalseite der PC-Karte angeordneten Steckanschluß. Der Anschluß für den externen Datenkanal kann seinerseits eines der folgenden Standard-Formate aufweisen:
- Videoport
- Common Interface
- 1394 Interface
- USB.

Die Kontaktbelegung des Kartenlesers 16 wird zur Seite des Steckplatzes 14 entsprechend dem jeweiligen Datenformat umgeschaltet.

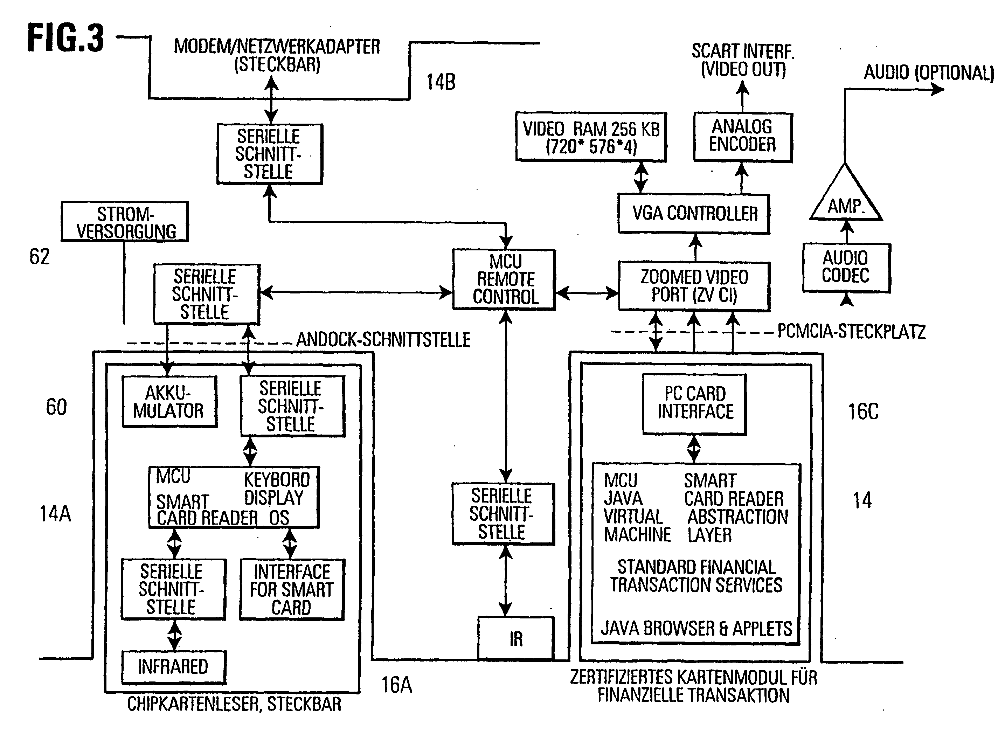

Bei der in Figur 3 gezeigten, erweiterten Ausführungsform der Schnittstelleneinrichtung ist ein zusätzlicher PCMCIA-Steckplatz 14A vorgesehen. An diesem Steckplatz 14A ist ein Chipkartenieser 16A anschließbar, der als PC-Karte ausgeführt ist. Dieser Chipkartenleser 16A verfügt über einen Akkumulator 60, der einen autonomen Betrieb außerhalb der Schnittstelleneinrichtung ermöglicht. Dieser Akkumulator 60 wird durch einen in der Schnittstelleneinrichtung angeordneten Stromversorgungsteil 62 geladen. Bei der bevorzugten Ausführungsform ist vorgesehen, daß der Chipkarlenleser 16A bei Bedarf an einem Fernbedienungsgerät angeschlossen wird, das mit der Schnittstelleneinrichtung gekoppelt ist, vorzugsweise über eine bidirektionale Infrarot-Übertragungsstrecke. Mittels einer durch den Chipkartenleser 16A auslesbaren Chipkarte (Smart Card) und der Bedienelemente des Fernbedienungsgeräts können mit der Schnittstelleneinrichtung sicherheitsrelevante Funktionen und Transaktionen durchgeführt werden, beispielsweise zur Überprüfung der Berechtigung zum Auslesen eines Halbleiter-Speichermediums, das sich in den Kartenleser 16 befindet.

Bei der in Figur 3 gezeigten Ausführungsform ist ferner an der Schnittstelleneinrichtung ein weiterer Steckplatz 14B vorgeschen, an dem ein Modem oder ein Netzwerkadapter angeschlossen werden kann. Über diesen zusätzlichen Steckplatz 14B und das daran angeschlossene steckbare Modul kann ein Zugang zu einem entfernten Netzwerk (z.B. Internet) erfolgen. In Kombination mit den vorstehend beschriebenen Funktionen des Chipkartenlesers 16A und des Fernbedienungsgeräts ist so auch die Abwicklung sicherheitsrelevanter Funktionen und Transaktionen über ein entferntes Netzwerk möglich.

Wie in Figur 3 weiterhin ersichtlich ist, kann an dem Steckplatz 14 wahlweise ein zertifiziertes Kartenmodul 16C für finanzielle Transaktionen angeschlossen werden. In Kombination mit dem Chipkartenleser 16A sind komplexe Identitäts- und Berechtigungsprüfungen für finanzielle Transaktionen möglich.

Bei allen beschriebenen Funktionen wird das Fernschgerät 10 als Video-Ausgabegerät benutzt, und die Umsetzung der Videodaten in das erforderliche Format erfolgt über die in Figur 2 gezeigten Komponenten, insbesondere die Schnittstelle 40 und die Videographik-Steuereinheit 42.

## Patentansprüche

1. Schnittstelleneinrichtung zwischen einem Halbleiter-Speichermedium (18) für mulitmediale Inhalte und einem Fernsehstandard-Videoanschluß, wobei die Schnittstelleneinrichtung folgendes umfaßt:
a) wenigstens einen PCMCIA-Steckplatz (14);
b) wenigstens einen Kartenleser (16) im Format einer PCMCIA-Karte;
c) eine Videographik-Steuereinheit (42);
d) eine Video-Einblend-Schnittstelle (40) zwischen PCMCIA-Steckplatz (14) und Videographik-Steuereinheit (42);
e) einen der Videographik-Steuereinheit (42) zugeordneten RAM-Speicher (44); und
f) einen Digital/Analog-Codierer (50) zwischen einem Ausgang der Videographik-Steuereinheit (42) und dem Fernsehstandard-Videoanschluß;
**dadurch gekennzeichnet, daß**
g) der Kartenleser (16) eine Dekodierelektronik umfaßt, die die aus dem Halbleiter-Speichermedium (18) ausgelesenen Daten in ein Format umsetzt, das zur Weiterverarbeitung in der Video-Einblend-Schnittstelle (40) geeignet ist.

2. Schnittstelleneinrichtung nach Anspruch 1, **dadurch gekennzeichnet, daß** der Kartenleser (16) mit Einrichtungen zum Entschlüsseln der in dem Halbleiter-Speichermedium (18) gespeicherten Daten versehen ist.

3. Schnittstelleneinrichtung nach Anspruch 1 oder 2, **dadurch gekennzeichnet, daß** der Kartenleser (16) mit einer Einrichtung zur Berechtigungsprüfüng versehen ist.

4. Schnittstelleneinrichtung nach einem der vorhergehenden Ansprüche, **dadurch gekennzeichnet, daß** der PCMCIA-Steckplatz (14) zwischen wenigstens zweien der folgenden Standard-Formate umschaltbar ist:
- Videoport
- Common Interface
- 1394 Interface
- USB.

5. Schnittstelleneinrichtung nach Anspruch 4, **dadurch gekennzeichnet, daß** der Kartenleser (16) seinerseits eine Schnittstelle zum Anschluß eines externen Datenkanals aufweist, der eines der folgenden Standard-Formate hat:
- Videoport
- Common Interface
- 1394 Interface
- USB.

6. Schnittstelleneinrichtung nach einem der vorhergehenden Ansprüche, **dadurch gekennzeichnet, daß** der Kartenleser (16) einen Infrarot-Empfänger (48) aufweist, über den der Anschluß des Datenkanals realisiert ist.

7. Schnittstelleneinrichtung nach einem der vorhergehenden Ansprüche, **gekennzeichnet durch** ein Hochgeschwindigkeits-Modem, über das die aus dem Halbleiter-Speichermedium (18) ausgelesenen Daten in ein entferntes Netzwerk übertragbar sind.

8. Schnittstelleneinrichtung nach einem der vorhergehenden Ansprüche, **gekennzeichnet durch** einen Netzwerk-Adapter (14B), über den die aus dem Halbleiter-Speichermedium (18) ausgelesenen Daten in ein entferntes Netzwerk übertragbar sind.

9. Schnittstelleneinrichtung nach einem der vorhergehenden Ansprüche, **dadurch gekennzeichnet, daß** die Schnittstelleneinrichtung (12) einen zweiten PCMCIA-Steckplatz (14A) und einen Chipkartenleser (16A) umfaßt, wobei der Chipkartenleser (16A) einen durch die Schnittstelleneinrichtung (12) aufladbaren Akkumulator (60) für einen autonomen Betrieb außerhalb der Schnittstelleneinrichtung (12) aufweist.

10. Schnittstelleneinrichtung nach Anspruch 9, **dadurch gekennzeichnet, daß** der Chipkartenleser (16A) an einem Fernbedienungsgerät (20) steckbar ist.

11. Schnittstelleneinrichtung nach Anspruch 10, **dadurch gekennzeichnet, daß** das Fernbedienungsgerät (20) über eine bidirektionale Infrarot-Schnittstelle (48) mit der Schnittstelleneinrichtung (12) gekoppelt ist.

## Claims

1. An interface device between a semiconductor storage medium (18) for multimedia contents and a television standard video port, the interface device comprising:
(a) at least one PCMCIA slot (14);
(b) at least one card reader (16) in the format of a PCMCIA card;
(c) a video graphics control unit (42);
(d) a video overlay interface (40) between the PCMCIA slot (14) and the video graphics control unit (42);
(e) a RAM memory (44) allocated to the video graphics control unit (42); and
(f) a digital-to-analog encoder (50) between an output of the video graphics control unit (42) and the television standard video port;
**characterized in that**
(g) the card reader (16) includes a decoding electronics which converts the data read out of the semiconductor storage medium (18) into a format which is suitable for further processing in the video overlay interface (40).

2. The interface device according to claim 1, **characterized in that** the card reader (16) is provided with means for decrypting the data stored in the semiconductor storage medium (18).

3. The interface device according to claim 1 or 2, **characterized in that** the card reader (16) is provided with a means for user authorization check.

4. The interface device according to any of the preceding claims, **characterized in that** the PCMCIA slot (14) is adapted to be changed over between at least two of the following standard formats:
- Videoport
- Common Interface
- 1394 Interface
- USB.

5. The interface device according to claim 4, **characterized in that** the card reader (16) has for its part an interface for connecting an external data channel which has any one of the following standard formats:
- Videoport
- Common Interface
- 1394 Interface
- USB.

6. The interface device according to any of the preceding claims, **characterized in that** the card reader (16) has an infrared receiver (48) via which the connection of the data channel is realized.

7. The interface device according to any of the preceding claims, **characterized by** a high-speed modem via which the data read out of the semiconductor storage medium (18) is transferable into a remote network.

8. The interface device according to any of the preceding claims, **characterized by** a network adapter (14B) via which the data read out of the semiconductor storage medium (18) is transferable into a remote network.

9. The interface device according to any of the preceding claims, **characterized in that** the interface device (12) comprises a second PCMCIA slot (14A) and a chip card reader (16A), the chip card reader (16A) having an accumulator (60) chargeable by the interface device (12) for a stand-alone operation outside the interface device (12).

10. The interface device according to claim 9, **characterized in that** the chip card reader (16A) is adapted to be plugged into a remote control unit (20).

11. The interface device according to claim 10, **characterized in that** the remote control unit (20) is coupled to the interface device (12) via a bidirectional infrared interface (48).

## Revendications

1. Dispositif d'interface entre un support de données à semi-conducteur (18), pour des données de type multimédia, et un connecteur standard vidéo pour téléviseurs, le dispositif d'interface étant composé :
a) d'au moins un emplacement PCMCIA (14),
b) d'au moins un lecteur de cartes (16) au format d'une carte PCMCIA,
c) d'un contrôleur graphique vidéo (42),
d) d'une interface d'affichage d'images vidéo (40) entre l'emplacement PCMCIA (14) et le contrôleur graphique vidéo (42),
e) d'une mémoire RAM (44) affectée au contrôleur graphique vidéo (42), et
f) d'un codeur analogique/numérique (50) entre une sortie du contrôleur graphique vidéo (42) et le connecteur standard vidéo du téléviseur,
**caractérisé en ce que** :
g) le lecteur de cartes (16) comprend un dispositif électronique de décodage qui transforme les données lues sur le support de données à semi-conducteur (18) dans un format qui permet leur traitement par l'interface d'affichage d'images vidéo (40).

2. Dispositif d'interface selon la revendication 1, **caractérisé en ce que** le lecteur de cartes (16) est équipé de dispositifs pour décoder les données stockées sur le support de données à semi-conducteur (18).

3. Dispositif d'interface suivant la revendication 1 ou 2, **caractérisé en ce que** le lecteur de cartes (16) est pourvu d'un dispositif de contrôle d'autorisation d'accès.

4. Dispositif suivant l'une quelconque des revendications précédentes, **caractérisé en ce que** l'emplacement PCMCIA (14) peut être commuté entre au moins deux des formats standards ci-après :
- Videoport
- Common Interface
- Interface 1394
- USB

5. Dispositif d'interface suivant la revendication 4, **caractérisé en ce que** le lecteur de cartes (16) dispose, lui aussi, d'une interface pour la connexion à un canal de données extérieur qui est sous l'un des formats ci-après :
- Videoport
- Common Interface
- Interface 1394
- USB

6. Dispositif d'interface suivant l'une quelconque des revendications précédentes, **caractérisé en ce que** le lecteur de cartes (16) est doté d'un récepteur infrarouge (48) utilisé pour établir la connexion au canal de données.

7. Dispositif d'interface suivant l'une quelconque des revendications précédentes, **caractérisé par** l'existence d'un modem grande vitesse permettant de transférer les données lues sur le support de données à semi-conducteur (18) vers un réseau distant.

8. Dispositif d'interface suivant l'une quelconque des revendications précédentes, **caractérisé par** l'existence d'un adaptateur réseau (14B) par lequel les données lues sur le support de données à semi-conducteur (18) peuvent être transférées vers un réseau distant.

9. Dispositif d'interface suivant l'une quelconque des revendications précédentes, **caractérisé en ce que** le dispositif d'interface (12) possède un deuxième emplacement pour une carte PCMCIA (14A) et un lecteur de cartes à puce (16A) ; ce lecteur de cartes à puce (16A) est équipé d'un accumulateur (60) rechargeable par le dispositif d'interface (12) pour assurer un fonctionnement autonome en dehors du dispositif d'interface (12).

10. Dispositif d'interface suivant la revendication 9, **caractérisé en ce que** le lecteur de cartes à puce (16A) est enfichable dans un boîtier de commande à distance (20).

11. Dispositif d'interface suivant la revendication 10, **caractérisé en ce que** le boîtier de commande à distance (20) est couplé au dispositif d'interface (12) par le biais d'une interface infrarouge bidirectionnelle (48).
